# EUROPÄISCHE PATENTANMELDUNG

(11) **EP 0 818 389 A1**
(43) Veröffentlichungstag der Anmeldung: **14.01.1998**
(21) Anmeldenummer: 97111132.3
(22) Anmeldetag: 03.07.1997
(51) Int. Cl.: B65B 9/20, B65B 1/46

(54) **Vertikale Schlauchbeutelmaschine und Verfahren zum Betreiben einer Schlauchbeutelmaschine**

(30) Priorität: 12.07.1996 DE 19628098
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer vertikalen Schlauchbeutelmaschine 1 ruht das untere Ende 11 eines Folienschlauches 6 ohne mechanische Spannung zum restlichen Folienschlauch 6 auf einer Waage 17. Die Waage 17 wägt das Ende 11 mitsamt einer in das Ende 11 gespendeten, dosierten Produktportion eines fließfähigen Produkts. Der Meßwert der Waage wird an eine volumetrische Dosiereinrichtung 20 geleitet. Die Dosiereinrichtung 20 ändert die Masse der dosierten Produktportion in Abhängigkeit von Meßwerten der Waage 17.

Mit der Erfindung werden die Verpackungsgeschwindigkeit und die Dosiergenauigkeit, insbesondere für Dosiermassen von weniger als 5 kg fließfähigen Produkts, z.B. Pulver, verbessert.

## Beschreibung

Die Erfindung betrifft zum einen eine vertikale Schlauchbeutelmaschine mit einer mittels eines Folienabzugs von einer Vorratsrolle abgezogenen Folienbahn, einer Formschulter zum Umformen der Folienbahn zu einem Folienschlauch, einer Dosiereinrichtung, einem Füllrohr, einer Längssiegeleinrichtung und gegeneinander beweglichen Quersiegelbacken zum Verschweißen des Folienschlauches, sowie einer Trenneinrichtung für dessen Durchtrennen. Zum anderen betrifft die Erfindung ein Verfahren zum Betreiben einer derartigen Schlauchbeutelmaschine.

Es ist bekannt, ein fließfähiges Produkt, z.B. ein Pulver, mittels einer sogenannten Schneckenwaage volumetrisch zu dosieren und die dosierten Produktportionen in Schlauchbeutel zu verpacken. Die Dosierung erfolgt durch einen vorgegebenen Umdrehungswert einer Dosierschnecke in einem Schneckenrohr, bei dem eine von der Dichte des Produkts abhängige Masse aus dem Schneckenrohr gespendet wird. Auch ist eine Volumendosierung bekannt, bei der der Inhalt eines Dosiervolumens einer Produktportion entspricht. Auch die Volumendosierung ist dichteabhängig. Des weiteren sind gravimetrische Methoden bekannt, bei denen jeweils eine Produktportion abgewogen und dann in einen Schlauchbeutel gefüllt wird.

Die bekannten Dosiereinrichtungen an Schlauchbeutelmaschinen haben den Nachteil, daß sie kleine Dosiermassen nicht mit hoher Leistung und Genauigkeit spenden können. Bei einer dichteabhängigen volumetrischen Dosiereinrichtung beeinflussen Dichteschwankungen beim Produkt das Dosierergebnis bei kleinen Dosiermassen besonders, da bei einer kleinen Dosiermasse eine momentane Dichteerhöhung oder Dichtereduzierung nur mit geringer Wahrscheinlichkeit durch ein entgegengesetztes Pendant ausgeglichen werden kann. Sei gravimetrischen Dosiereinrichtungen ist die Dosierleistung für kleine Massen besonders gering, da hierbei nach einer relativ kurzen Grobdosierphase eine vergleichsweise lange Feindosierphase folgt.

Der Erfindung liegt die Aufgabe zu Grunde, eine vertikale Schlauchbeutelmaschine mit einer Dosiereinrichtung derart auszugestalten und ein entsprechendes Verfahren zu finden, so daß auch kleine Dosiermassen für fließfähige Produkte mit hoher Leistung und Genauigkeit gespendet werden können.

Gelöst ist die Aufgabe gemäß den kennzeichnenden Teilen der Ansprüche 1 und 8.

Gemäß Anspruch 1 ist unterhalb des unteren Endes des Folienschlauches eine vom Ende belastbare Waage vorgesehen, wobei bei belasteter Waage der Folienschlauch keine mechanische Spannung auf das Ende des Folienschlauches ausübt, und die Waage über eine Meßwertleitung mit einer volumetrischen Dosiereinrichtung verbunden ist. Bei dem erfindungsgemäßen Verfahren (Anspruch 8) zum Betreiben einer Schlauchbeutelmaschine ruht das Ende des Folienschlauches ohne mechanische Spannung auf der Waage, dann leitet die Waage den Meßwert an die volumetrische Dosiereinrichtung, und die Dosiereinrichtung ändert die dosierte Masse in Abhängigkeit von gelieferten Meßwerten der Waage.

Die erfindungsgemäße Schlauchbeutelmaschine und das erfindungsgemäße Verfahren haben den Vorteil, daß die von einer volumetrischen Dosiereinrichtung abgegebenen Produktportionen mit hoher Leistung und Genauigkeit gespendet werden können. Dichteschwankungen werden von der Waage derart registriert, daß das Istgewicht zu einem bestimmten Zeitpunkt während des Dosiervorganges oder nach dessen Beendigung mit einem Sollwert verglichen wird, und die Dosiereinrichtung zu einer Korrektur veranlaßt wird. Die Korrektur kann darin bestehen, einen laufenden Dosiervorgang geringfügig zu verlängern oder zu verkürzen. Sie kann aber auch erst für die nächstfolgende Produktportion erfolgen. Dadurch, daß das befüllte Ende des Folienschlauches ohne Rückhaltekraft des Folienschlauches auf der Waage ruht, kann die in das Ende eingefüllte Masse genau gemessen werden.

Weitere vorteilhafte Ausgestaltungen der Erfindung sind in den Ansprüchen 2 bis 7 und 9 bis 12 beschrieben.

Weist die Waage einen Klappenmechanismus zur Aufgabe und Abgabe des Endes auf (Anspruch 2), so kann bei geschlossenen Klappen eine Wägung der Masse des Endes auf den Klappen erfolgen, und bei geöffneten Klappen kann nach erfolgter kopfseitiger Abschweißung und Abtrennung des aus dem Ende erzeugten Schlauchbeutels der Schlauchbeutel nach unten aus der Waage abgegeben werden.

Mittels einer Einrichtung zur Höhenverstellung der Waage (Anspruch 3) kann die Waage bei einer Änderung der Dosiermasse in der Höhe verstellt werden, um einer geänderten Länge des Endes zu entsprechen. Als robustes, zuverlässiges und ortsgenau einstellbares Bauteil der Einrichtung eignet sich hierzu eine um eine Achse von einem Motor rotierbar angetriebene Gewindespindel (Anspruch 4).

Weist die Dosiereinrichtung einen im Füllrohr verlaufenden Schneckenförderer auf (Anspruch 5), so kann auch eine kleine Dosiermenge bereits relativ gut dosiert werden, und die Meßwertleitung kann von einer Regeleinrichtung direkt an den Motor des Schneckenförderers geführt sein, um Dosierkorrekturen zu erreichen. Ein Nachrieseln aus dem Schneckenförderer wird vermieden, wenn analog Anspruch 6 ein Verschluß am Auslaß des Schneckenförderers vorgesehen ist. Insbesondere sehr leicht fließende, pulverförmige Produkte neigen zu einem Nachrieseln. Der Verschluß wird nach erfolgtem Dosiervorgang geschlossen und vor Beginn eines neuen Dosiervorganges wieder geöffnet.

Ein befüllter Schlauchbeutel, der eine zu hohe Massenabweichung vom Sollwert hat, kann mittels einer mit der Waage verbundenen Abwurfeinrichtung (Anspruch 7, Anspruch 11) herausgeworfen werden.

Da, abhängig von der Länge des Schlauchbeutels und der Dicke der Folie, das Ende die Waage unterschiedlich stark belasten kann, und die Dosiermasse unabhängig von der Verpackung (Tarawert) sein muß, wird die Masse des ungefüllten Endes bei den Wägungen der Produktportionen abgezogen. Dazu wird gemäß Anspruch 9 vor dem Verpacken einer geänderten Produktportion als Tarawert die Belastung der Waage mit einem ungefüllten Ende gemessen und gespeichert. Der Speicherwert wird dann von allen Bruttomeßwerten abgezogen.

Um die Wägung nicht zu beeinflussen, sollte erst nach erfolgter Wägung einer dosierten Masse der Folienschlauch quer verschweißt und durchtrennt werden (Anspruch 10).

Eine besonders hohe Leistungssteigerung wird bei guter Genauigkeit bei Massen erreicht, die maximal fünf Kilogramm betragen (Anspruch 12).

Im folgenden wird die Erfindung an Hand einer ein Ausführungsbeispiel darstellenden Figur näher beschrieben. Es zeigt:

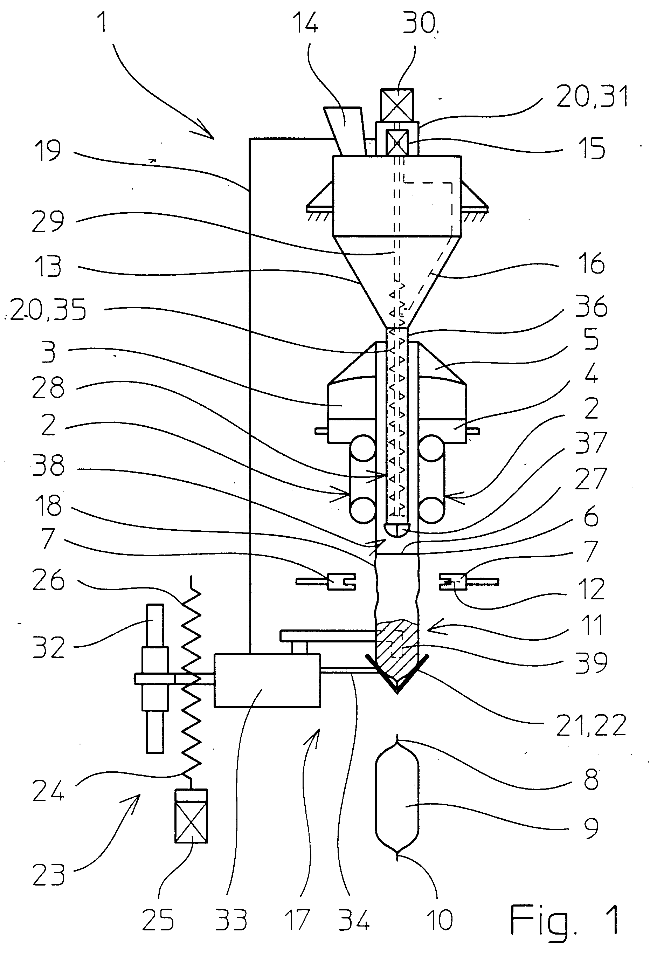

- Figur 1: in einer Seitenansicht in einer Prinzipdarstellung eine vertikale Schlauchbeutelmaschine mit einer volumetrischen Dosiereinrichtung, die mittels eines im Füllrohr eingesetzten Schneckenförderers zu verpackendes (zeichnerisch nicht dargestelltes) Produkt aus einem Produktbehälter in das untere, verschweißte Ende eines Folienschlauches dosiert, wobei das Ende einen Klappenmechanismus einer Waage belastet, das Ende ohne mechanische Spannung zum restlichen Folienschlauch auf dem Klappenmechanismus liegt, und die Waage über eine Meßwertleitung mit der Dosiereinrichtung verbunden ist.

Bei einer vertikalen Schlauchbeutelmaschine 1 wird mittels eines Folienabzugs 2 eine ebene Folienbahn 3 von einer Vorratsrolle 4 abgezogen und über eine Formschulter 5 zu einem Folienschlauch 6 umgeformt. Der Folienschlauch 6 wird in bekannter Weise an einer (nicht dargestellten) Längssiegeleinrichtung längs und mittels gegeneinander beweglicher Quersiegelbacken 7 quer zur Folientransportrichtung verschweißt. Die Quersiegelbacken 7 erzeugen während eines Schweißvorganges gleichzeitig die Kopfnaht 8 eines bereits befüllten Schlauchbeutels 9 und die Bodennaht 10 des Endes 11 des Folienschlauches 6, wobei diese Bodennaht 10 die Bodennaht 10 eines nachfolgenden zu befüllenden Schlauchbeutels ist. Der Folienschlauch 6 wird zwischen einer Kopfnaht 8 und einer sich direkt daran anschließenden Bodennaht 10 von einer Trenneinrichtung 12 durchtrennt.

Oberhalb der Formschulter 5 befindet sich ein Produktbehälter 13. Der Produktbehälter 13 wird über einen Füllstutzen 14 mit Produkt versorgt. Das Produkt im Produktbehälter 13 ist ein Pulver und wird dort mittels eines von einem Motor 15 angetriebenen Rührers 16 gerührt.

Unterhalb des unteren Endes 11 des Folienschlauches 6 befindet sich eine vom Ende 11 belastete Waage 17. Der Folienschlauch 6 bildet geringfügigst Wellen 18 aus, da keinerlei mechanische Spannung zwischen dem oberen Bereich des Folienschlauches 6 und dem Ende 11 des Folienschlauches 6 herrscht. Der Folienabzug 2 wurde dementsprechend betrieben.

Die Waage 17 ist über eine Meßwertleitung 19 mit einer volumetrischen Dosiereinrichtung 20 verbunden.

Die Waage 17 weist als Waagschalen 21 einen Klappenmechanismus 22 zur Aufnahme und Abgabe des Endes 11 auf. Des weiteren ist an der Waage 17 eine Einrichtung 23 zur Höhenverstellung der Waage 17 vorgesehen. Die Einrichtung 23 weist eine um eine Achse 24 von einem Motor 25 rotierbar angetriebene Gewindespindel 26 auf. Die Waage 17 wird längs einer Führung 32 durch einen definierten Umdrehungswinkel der Gewindespindel 26 um eine gewisse Strecke bzgl. ihrer Höhe verschoben. Unabhängig von ihrer Höhe mißt eine Kraftmeßdose 33 die von der Kraftübertragung 34 übertragene Gewichtskraft des Endes 11. Die Dosiereinrichtung 20 weist einen in einem Füllrohr 27 verlaufenden Schneckenförderer 28, eine starre Verbindung 29, einen Motor 30 und eine Steuereinrichtung 31 auf. Der Schneckenförderer 28 besteht aus einer Förderschnecke 35 und einem Schneckenrohr 36 und ist zwecks einer Nachrieselverhinderung mittels eines Verschlusses 37 an seinem Auslaß 38 verschließbar.

An der Waage 17 ist eine Auswurfeinrichtung 39 zum Auswerfen eines unkorrekt befüllten Schlauchbeutels 9 aus dem Klappenmechanismus 22 vorgesehen.

An der Schlauchbeutelmaschine 1 wird zu Beginn einer Verpackungserie zunächst ein ungefülltes Ende 11 des Folienschlauches 6 auf den Klappenmechanismus 22 gebracht. Dazu wird die Waage 17 durch Betätigung des Motors 25 derart höhenverstellt, daß das Ende des Folienschlauches 6 ohne mechanische Spannung auf der Waage 17 liegt, wobei der Folienschlauch 6 Wellen 18 ausbildet. Der Meßwert der Waage 17 entspricht hierbei relativ gut dem Tarawert des Schlauchbeutels 9. Der Meßwert wird über die Meßwertleitung 19 der Steuereinrichtung 31 zugeleitet und dort gespeichert. Dann wird durch Betätigung des Motors 30 die Förderschnecke 35 um einen der Dosiermasse entsprechenden Winkel gedreht, wobei diese Dosiermasse bei geöffnetem Verschluß 37 aus dem Schneckenrohr 36 in das Ende 11 des Folienschlauches 6 gespendet wird. Nach Beendigung des Dosiervorganges wird der Bruttomassenwert des gefüllten Endes 11 über die Meßwertleitung der Steuereinrichtung 31 zugeleitet.

Bei korrekter Masse wird der Folienschlauch 6 von den Quersiegelbacken 7 quer verschweißt, von der Trenneinrichtung 12 durchtrennt und durch Öffnen des Klappenmechanismusses 22 nach unten abgegeben.

Bei unkorrekter Masse ändert die Steuereinrichtung 31 der Dosiereinrichtung 20 die dosierte Masse in Abhängigkeit des gelieferten Meßwertes. Bei zu hoher Masse wird für die nächste Produktportion ein geringerer Umdrehungswinkel der Förderschnecke 35 vorgegeben, bei zu niedriger Masse ein höherer. Erfüllt ein erzeugter, befüllter Schlauchbeutel 9 nicht den Toleranzanforderungen, so wird er von der Auswurfeinrichtung 39 bei geschlossenem Klappenmechanismus 22 horizontal aus dem Klappenmechanismus 22 herausgeworfen.

Die dosierte Masse beträgt z.B. zwei Kilogramm.
- 1: Vertikale Schlauchbeutelmaschine
- 2: Folienabzug
- 3: ebene Folienbahn
- 4: Vorratsrolle
- 5: Formschulter
- 6: Folienschlauch
- 7: Quersiegelbacke
- 8: Kopfnaht
- 9: Schlauchbeutel
- 10: Bodennaht
- 11: Ende
- 12: Trenneinrichtung
- 13: Produktbehälter
- 14: Füllstutzen
- 15: Motor
- 16: Rührer
- 17: Waage
- 18: Welle
- 19: Meßwertleitung
- 20: Dosiereinrichtung
- 21: Waagschale
- 22: Klappenmechanismus
- 23: Einrichtung zur Höhenverstellung
- 24: Achse
- 25: Motor
- 26: Gewindespindel
- 27: Füllrohr
- 28: Schneckenförderer
- 29: Verbindung
- 30: Motor
- 31: Steuereinrichtung
- 32: Führung
- 33: Kraftmeßdose
- 34: Kraftübertragung
- 35: Förderschnecke
- 36: Schneckenrohr
- 37: Verschluß
- 38: Auslaß
- 39: Auswurfeinrichtung

## Patentansprüche

1. Vertikale Schlauchbeutelmaschine mit einer mittels eines Folienabzugs von einer Vorratsrolle abgezogenen Folienbahn, einer Formschulter zum Umformen der Folienbahn zu einem Folienschlauch, einer Dosiereinrichtung, einem Füllrohr, einer Längssiegeleinrichtung und gegeneinander beweglichen Quersiegelbacken zum Verschweißen, sowie einer Trenneinrichtung zum Durchtrennen des Folienschlauches, dadurch gekennzeichnet, daß unterhalb des unteren Endes (11) des Folienschlauches (6) eine vom Ende (11) belastbare Waage (17) vorgesehen ist, daß bei belasteter Waage (17) der Folienschlauch (6) keine mechanische Spannung auf das Ende (11) des Folienschlauches (6) ausübt, und daß die Waage (17) über eine Meßwertleitung (19) mit einer volumetrischen Dosiereinrichtung (20) verbunden ist.

2. Schlauchbeutelmaschine nach Anspruch 1, dadurch gekennzeichnet, daß die Waage (17) einen Klappenmechanismus (22) zur Aufnahme und Abgabe des Endes (11) aufweist.

3. Schlauchbeutelmaschine nach Anspruch 1 oder Anspruch 2, dadurch gekennzeichnet, daß an der Waage (17) eine Einrichtung (23) zur Höhenverstellung der Waage (17) vorgesehen ist.

4. Schlauchbeutelmaschine nach Anspruch 3, dadurch gekennzeichnet, daß die Einrichtung (23) eine um eine Achse (24) von einem Motor (25) rotierbar angetriebene Gewindespindel (26) aufweist.

5. Schlauchbeutelmaschine nach Anspruch 1, dadurch gekennzeichnet, daß die Dosiereinrichtung (20) einen im Füllrohr (27) verlaufenden Schneckenförderer (28) aufweist.

6. Schlauchbeutelmaschine nach Anspruch 5, dadurch gekennzeichnet, daß der Schneckenförderer (28) an seinem Auslaß (38) einen Verschluß (37) aufweist.

7. Schlauchbeutelmaschine nach Anspruch 1, dadurch gekennzeichnet, daß an der Waage (17) eine mit der Waage (17) verbundene Auswurfeinrichtung (39) vorgesehen ist.

8. Verfahren zum Betreiben einer Schlauchbeutelmaschine gemäß Anspruch 1, dadurch gekennzeichnet, daß das Ende (11) des Folienschlauches (6) ohne mechanische Spannung auf der Waage (17) ruht, daß dann die Waage (17) den Meßwert an die volumetrische Dosiereinrichtung (20) leitet, und daß die Dosiereinrichtung (20) die dosierte Masse in Abhängigkeit von gelieferten Meßwerten der Waage (17) ändert.

9. Verfahren nach Anspruch 8, dadurch gekennzeichnet, daß vor dem Verpacken eines neuen Produkts oder einer neuen Dosiermasse als Tarawert die Belastung der Waage (17) mit einem ungefüllten Ende (11) gemessen und gespeichert wird.

10. Verfahren nach Anspruch 8 oder Anspruch 9, dadurch gekennzeichnet, daß nach einer Wägung einer dosierten Masse der Folienschlauch (6) quer verschweißt und durchtrennt wird.

11. Verfahren nach Anspruch 10, dadurch gekennzeichnet, daß ein erzeugter Schlauchbeutel, der eine zu hohe Abweichung zum Sollwert der dosierten Masse aufweist, von der Auswurfeinrichtung (39) herausgeworfen wird.

12. Verfahren nach Anspruch 8, dadurch gekennzeichnet, daß die dosierte Masse maximal fünf Kilogramm beträgt.
